# EUROPEAN PATENT SPECIFICATION

(11) **EP 4 607 667 B1**
(45) Date of publication and mention of the grant of the patent: **21.01.2026**
(21) Application number: 24159572.7
(22) Date of filing: 26.02.2024
(51) Int. Cl.: H01M 50/209, H01M 50/367, H01M 50/507, H01M 50/569, H01M 10/48, H01M 10/647

(54) **BATTERY SYSTEM**
BATTERIESYSTEM
SYSTÈME DE BATTERIE

(43) Date of publication of application: 27.08.2025
(73) Proprietor: Samsung SDI Co., Ltd., Yongin-si, Gyeonggi-do 17084 (KR)
(72) Inventor: Haring, Fritz, 8600 Bruck a. d. Mur (AT); Köppel, Andreas, 8144 Haselsdorf-Tobelbad (AT)
(74) Representative: Gulde & Partner

(56) References cited:
- JP-A- 2009 117 149
- US-A1- 2014 335 378
- US-A1- 2022 320 600
- US-A1- 2023 402 701

## Description

### Field of the Disclosure

The present disclosure relates to a battery system including a battery pack and a cell contacting unit and to an electric vehicle including the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H2, CO2, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish. Document US 2023/402701 A1 discloses a cell contacting system for contacting energy storage cells of an energy storage device, in particular an energy storage device for a vehicle, comprising a circuit board and an additional circuit board including at least one sensor element, wherein the circuit board and the additional circuit board are electrically connected to each other by a contacting device. Further prior art representing the technological background is disclosed in documents US 2014/335378 A1, US 2022/320600 A1 and JP 2009 117149 A.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system includes a battery pack including a plurality of battery cells each having a pair of electrode terminals and a venting valve disposed between the electrode terminals, the battery cells being arranged in at least two cell stacks extending adjacent to each other along a stacking direction; wherein the electrode terminals and the venting valves of the battery cells face a first side of the battery pack; and a cell contacting unit, CCU, disposed on the first side of the battery pack, the CCU including a plurality of busbars electrically connecting the adjacent rows of electrode terminals of battery cells of two adjacent cell stacks, wherein the CCU is configured to cover both adjacent rows of the electrode terminals of the battery cells of the adjacent cell stacks and less than half of the area between the electrode terminals of each of the battery cells of the adjacent cell stacks.

According to another aspect of the present disclosure, an electric vehicle includes the battery system.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic top view of a battery system according to an embodiment showing a top side of a battery pack with a CCU.
Fig. 2 illustrates a schematic top view of a battery system according to another embodiment showing a top side of a battery pack with two CCUs.

### Detailed Description of the Invention

Reference will now be made in detail to embodiments, examples of which are illustrated in the accompanying drawings. Effects and features of the exemplary embodiments will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. In the drawings, the relative sizes of elements, layers, and regions may be exaggerated for clarity.

It will also be understood that when a region or an element is referred to as being "above" or "on" another region or element, it can be directly on the other region or element, or intervening regions or elements may also be present.

### General Concept

According to one aspect of the present disclosure, a battery system including a battery pack and a cell contacting unit, CCU, is provided.

The battery pack includes a plurality of battery cells each having a pair of electrode terminals and a venting valve disposed between the electrode terminals. In general, each of the battery cells includes a venting opening into which the venting valve is disposed. The battery cells are arranged in at least two, at least preferably five, particular preferred at least eight, cell stacks extending adjacent to each other along a stacking direction. The battery cells may be prismatic cells. The shape of the battery cells may be rectangular. The battery cells, however, are not limited to the rectangular shape. The battery cells may also be of any other kind of shape, for example, square-shaped or ellipsoidal-shaped. The electrode terminals and the venting valves of the battery cells face a first side of the battery pack.

The CCU is disposed on the first side of the battery pack and includes a plurality of busbars electrically connecting two adjacent rows of electrode terminals of battery cells of two adjacent cell stacks. The shape of the CCU may be rectangular. The CCU, however, is not limited to the rectangular shape. The CCU may also be of any other kind of shape, for example, square-shaped or ellipsoidal-shaped. The CCU is configured to cover both adjacent rows of the electrode terminals of the battery cells of the adjacent cell stacks and less than half of the area between the electrode terminals of each of the battery cells of the adjacent cell stacks. In other words, the CCU is configured to extend less than half of the distance between the pairs of electrode terminals into the area between the electrode terminals of each of the battery cells of the adjacent cell stacks. Technically speaking, the CCU does not extend into the area between the electrode terminals but into an area shifted in parallel to, namely above, the area between the electrode terminals.

Since the CCU covers less than half of the area between the electrode terminals of each of the battery cells of the adjacent cell stacks, an open space above the area between the electrode terminals is provided or obtained. For example, when the battery system includes two CCUs as described herein which are arranged adjacent to each other, less than 100 percent of the area between the electrode terminals will be covered. The CCU is configured to cover less than 45 percent, particularly preferred less than 40 percent, more particularly preferred less than one third or one fourth, of the area between the electrode terminals of each of the battery cells of the adjacent cell stacks. The obtained open space is fluidly coupled to the venting valve between the electrode terminals so that a degassing channel is formed adjacent to the CCU and above the venting valves. The less than half of the area between the electrode terminals is covered by the CCU, the more volume for the open space, i.e. the degassing channel, is obtained to discharge the hot gas efficiently.

In general, degassing channels facilitate the discharge of gas from the venting valves of the battery cells to the outside of the battery system such that the internal pressure of the battery system may not increase to a point at which the stability of the battery system is deteriorating. Thus, the risk of arching of a cover of the battery pack may be reduced. The larger the volume of the degassing channels is, the better are the obtained beneficial effects in general. Furthermore, the vented gas is also burnable and harmful to electronics. The degassing channel provided by the structure of the battery system, e.g. of the CCU, predetermines a flow route of hot gas vents when emitted by the battery cells, thereby allowing better protection of the electronics from harm.

According to one embodiment, the CCU is configured to not extend into the area between the electrode terminals of each of the battery cells of the adjacent cell stacks. Accordingly, the volume of open space, i.e. the degassing channel, may be increased or even maximized. For example, this embodiment provides more space for additional parts of the battery system, e.g. for venting gas guiding elements, such that a more space saving battery system may be achieved.

According to another embodiment, the CCU further includes measuring lines for transmitting at least one physical property of the battery cells. The physical property may be, for example, voltage, current or temperature of the battery cells. According to this embodiment, the measuring lines are arranged between both adjacent rows of the electrode terminals of the battery cells of the adjacent cell stacks. Due to the arrangement of the measuring lines between the rows of adjacent cell stacks, even more space may be saved between the electrode terminals of the battery cells of the cell stacks so that the volume of the open space, i.e. the degassing channel, may be further increased.

The CCU may further include a cell supervision circuit, CSC, for detecting the at least one physical property. The CSC is connected to the measuring lines and may be arranged on a first side of the CCU facing away from the battery cells. The arrangement of the CSC on the first side of the CCU ensures that hot gas emitted from the battery cells may not harm the CSC (as part of the electronics of the battery system) since the hot gas is guided along another path, namely through the degassing channel formed by the open space. Consequently, the hot gas does not come into contact with the CSC. The CSC may be disposed to partially cover the electrode terminals of both adjacent rows of the electrode terminals of the battery cells of the adjacent cell stacks. Furthermore, the CSC may be connected to a battery module management, BMM, and/or a battery management system, BSM of the battery system for transmitting the at least one detected physical property.

According to another embodiment, the CCU further includes an electrically isolating carrier configured to cover both adjacent rows of the electrode terminals of the battery cells of the adjacent cell stacks and less than half of the area between the electrode terminals of each of the battery cells of the adjacent cell stacks, wherein the busbars and/or the measuring lines are fixed to the electrically isolating carrier. In other words, the electrically isolating carrier may substantially provide the covering function of the CCU. The electrically isolating carrier may include or consist of plastic.

According to another embodiment, the battery system further includes a venting gas guiding element arranged above the venting valves of the battery cells of one of the cell stacks, wherein the venting gas guiding element extends along the stacking direction for accommodating a or the degassing channel of the cell stack. In other words, the venting gas guiding element is arranged in, e.g. inserted into, the open space obtained by the CCU described herein. The venting gas guiding elements may be designed as a simple and low-cost structure, e.g. made of plastic. The venting gas guiding element also provides the freedom of designing the degassing channel as purposed, e.g. to selectively guide the hot gas not to be in contact with the electronics or other vulnerable components and to reduce the risk of arching the cover of the battery pack.

The venting gas guiding element may further include a U-shaped cross section, wherein an open side of the venting gas guiding element faces the venting valves of the battery cells. For example, the venting gas guiding element may be an object, e.g. a cube or a cuboid, with one open side facing the venting valves of the battery cells. The use of a U-shaped cross section provides protection of the parts of the battery system from the hot gas, e.g. the electronics, while providing a relatively large open space for forming the degassing channel.

Furthermore, the venting gas guiding element may include at least one degassing opening in a closed side of the venting gas guiding element opposite to the open side.

Additionally or alternatively, the venting gas guiding element may be arranged adjacent to and/or in contact with the CCU. For example, the venting gas guiding element and the CCU are configured to form a tight connection therebetween to prevent hot gas from leaking the degassing channel and harming the electronics of the battery system.

According to another embodiment, the battery system includes a plurality of venting gas guiding elements arranged adjacent to and in contact with one side of and/or with opposite sides of the CCU along the stacking direction. Accordingly, one or more degassing channels may be obtained on either one or both sides of the CCU such that both adjacent cell stacks each accommodate at least one degassing channel.

According to another embodiment, the battery system further includes an electronics cover configured to extend along the stacking direction and to cover the CCU and/or the CSC. Advantageously, the electronics of the battery system, e.g. the CCU and/or the CSC, can be protected by the electronics cover. In other words, the electronics of the battery system may be shielded.

The electronics cover may include a U-shaped cross section, wherein an open side of the electronics cover faces the CCU and/or the CSC. U-shaped structures provide protection of the parts of the battery system from the hot gas or external influences, e.g. the electronics, while providing a relatively large open space for accommodating parts of the battery system, e.g. the electronics.

According to some embodiments, the venting gas guiding element and/or the electronics cover consist of mica and/or include a layer consisting of mica. Mica is an electrically isolating and temperature resistant material.

According to another embodiment, the battery cells are arranged in at least three cell stacks extending adjacent to each other along the stacking direction, wherein the battery system includes two adjacently disposed CCUs so that the degassing channel of the cell stack arranged in the middle of the three cell stacks is partially formed by the open space between both CCUs. It may be understood, that the present disclosure is not limited to three cell stacks with two CCUs. The number of cell stacks and CCUs may be of any other kind, as long as an open space as described herein is obtained in order to form a degassing channel for the plurality of cell stacks of at least one cell stack.

According to another aspect of the present disclosure, an electric vehicle comprises the battery system as disclosed herein. The advantages set forth in view of the battery system can be analogously achieved by the electric vehicle. A recurring description thereof is therefore omitted.

### Specific Embodiments

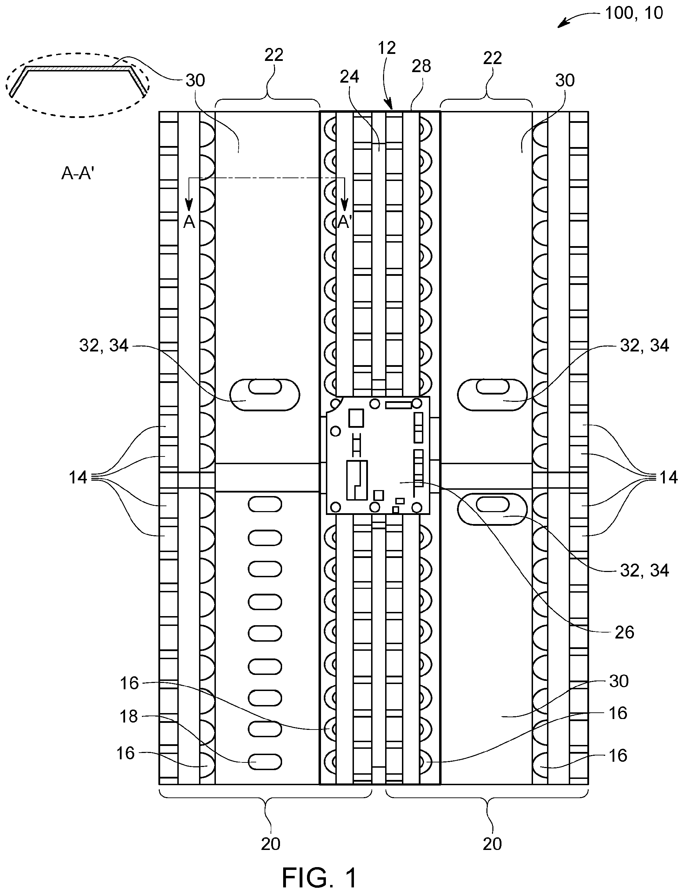

Fig. 1 is a top view illustrating a schematic top view of a battery system 100 according to an embodiment showing a top side of a battery pack 10 with a cell contacting unit, CCU, 12 according to an embodiment.

The battery system 100 includes the battery pack 10 which includes a plurality of battery cells 14 each having a pair of electrode terminals 16 and a venting valve 18 disposed between the electrode terminals 16. The battery cells 14 are arranged in two cell stacks 20 extending adjacent to each other along a stacking direction. With respect to the image plane of Fig. 1, the stacking direction extends from bottom to top (or vice versa). As shown in Fig. 1, each of both cell stacks 20 includes a number of 20 (twenty) battery cells 14 firmly stacked along the stacking direction. However, the depicted number of battery cells 14 is merely exemplary and not limited thereto. It may be understood that the battery cells 14 may be of any number. For exemplary purposes, the battery cells 14 are prismatic cells with rectangular shapes, wherein the electrode terminals 16 are disposed at opposite ends of the longer side of the rectangle.

Each battery cell 14 includes a venting opening in a cell housing between the electrode terminals 16 into which the venting valve 18 is disposed (refer to the lower left section of the battery pack in Fig. 1). The venting opening of each battery cell 14 is arranged at the center of the surface of the battery cell 14 which also includes the pair of electrode terminals 16. As further shown in Fig. 1, the electrode terminals 16, the venting openings and the venting valves 18 of the battery cells 14 face a first side of the battery pack 10, e.g. a top side of the battery pack 10.

The CCU 12 is disposed on the first side, namely the top side, of the battery pack 10 and includes a plurality of busbars electrically connecting the adjacent rows of electrode terminals 16 of the battery cells 14 of the two cell stacks 20. Instead of electrically connecting the electrode terminals 16 of the battery cells 14 of the same cell stack 20, the CCU 12 electrically connects one row of electrode terminals 16 extending along the stacking direction of one cell stack 20 and one row of electrode terminals 16 extending along the stacking direction of the second cell stack 20. In other words, the CCU 12 connects the rows of electrode terminals 16 of two adjacent cell stacks 20 which are (directly) adjacent to each other.

The CCU 12 is further configured to cover the adjacent rows of the electrode terminals 16 of the battery cells 14 of both cell stacks 20, i.e. one row per cell stack 20, e.g. by using an electrically isolating carrier 28 to which the busbars are fixed. Thus, the CCU 12 partially covers both adjacent cell stacks 20. As shown in Fig. 1, the CCU 12 fully covers the adjacent rows of electrode terminals 16 along the stacking direction as well as the area between the adjacent rows of electrode terminals 16. In other words, the CCU 12 spans the adjacent rows of electrode terminals 16. For example, the CCU 12 is rectangular-shaped. However, the shape of the CCU 12 may also be different, e.g. corresponding to the respective shape of the battery cells 14 and/or the battery pack 10.

In addition, the CCU 12 is configured to cover less than half of the area 22 between the electrode terminals 16 of each of the battery cells 14 of the adjacent cell stacks 20. As shown in the embodiment of Fig. 1, the CCU 12 is configured to not extend into the area 22 between the electrode terminals 16 of each of the battery cells 14 of the adjacent cell stacks 20. However, the CCU 12 is not limited thereto. Rather, the CCU 12 may also be configured to cover less than 45 percent, 40 percent, 33 percent or 25 percent of the area 22 between electrode terminals 16.

In the event of a thermal runway, for example, large quantities of hot gas are generally ejected from inside of the failed battery cell 14 through the venting opening of the cell housing into the battery pack 10. As the main components of the vented gas are H2, CO2, CO, electrolyte vapor and other hydrocarbons, the vented gas is burnable, potentially toxic and harmful to electronics. The vented gas also causes a gas-pressure increase inside the battery pack 10, thereby increasing the risk of arching of the cover of the battery pack 10. However, as the venting valves 18 of the battery cells 14 are located within the area 22 between the electrode terminals 16 and the structure of the CCU 12 ensures that an open space, e.g. a slit, a gap and so on, is provided above the venting valves 18, the hot gas can be discharged without impairment to the other structures and parts of the battery pack 10. In order to exemplarily show the obtained open space above the battery cells 14, the lower part of the left cell stack 20 in the lower left section of Fig. 1 is depicted without any parts thereon.

As further illustrated in Fig. 1, the CCU 12 includes measuring lines 24 for transmitting cell voltages and temperatures of the battery cells 14 and a cell supervision circuit, CSC, 26 for detecting the cell voltages and the temperatures of the battery cells 14. The measuring lines 24 are arranged between both adjacent rows of the electrode terminals 16 of the battery cells 14 of the adjacent cell stacks 20, e.g. by being fixed to the electrically isolating carrier 28. This arrangement of the measuring lines 24 enables a more compact implementation of the electronics of the battery pack 10, e.g. the electronics required for supervision of the battery cells 14 - compared to the arrangement of the measuring lines 24 in the area 22 between the electrode terminals 16. Also, the CCU 12 can be implemented to extend less into the area 22 between the electrode terminals 16.

The CSC 26 is connected to the measuring lines 24 and arranged on a first side of the CCU 12 facing away from the battery cells 14, e.g. to the top side as shown in Fig. 1. As the CSC 26 is arranged on a top side of the CCU 12, e.g. shielded by the electrically isolating carrier 28, the hot gas does not come into contact with the CSC 26 when emitted from the venting valves 18 of the battery cells 14. Furthermore, due to the structure of the CCU 12, the CSC 26 is not arranged above the venting valve 18 and/or the area 22 between the electrode terminals 16.

The battery system 100 further includes a plurality of venting gas guiding elements 30 arranged above the venting valves 18 of the battery cells 14 of the cell stacks 20. The venting gas guiding elements 30 are each configured to fit into the open space provided by the CCU 12 and to form a degassing channel 32. For example, the venting gas guiding elements 30 are rectangular shaped. The venting gas guiding elements 30, however, are not limited to the rectangular shape. The venting gas guiding elements 30 may also be of any other kind of shape, for example, square-shaped or ellipsoidal-shaped. Advantageously, each cell stack 20 includes at least one venting gas guiding element 30. For example, the embodiment disclosed in Fig. 1 includes four venting gas guiding elements 30, two for each cell stack 20, although, as mentioned above, the lower part of the left cell stack 20 of Fig. 1 does not illustrate any parts thereon, e.g. the venting gas guiding element 30.

The venting gas guiding elements 30 extend along the stacking direction for accommodating degassing channels 32 for the cell stacks 20. In other words, the venting gas guiding elements 30 allow to form the degassing channels 32 when inserted into the open space adjacent to the CCU 12. Degassing channels 32 are important to facilitate the discharge of gas from the venting valves 18 of the battery cells 14 to the outside of the battery system 100 such that the internal pressure of the battery system 100 may not increase to a point at which the stability of the battery system 100 is deteriorating. The greater the volume of the degassing channels 32 is, the better the obtained effects are in general. As the vented gas is also burnable and harmful to electronics, the venting gas guiding elements 30 also predetermine a flow route of the hot gas vents emitted by the battery cells 14, e.g. in case of a thermal runway, thereby allowing better protection of the electronics from harm, e.g. by not arranging the electronics into or directly next to a degassing channel 32.

As further shown in Fig. 1, the venting gas guiding elements 30 include U-shaped cross sections, wherein open sides of the venting gas guiding elements 30 face the venting valves 18 of the battery cells 14. In other words, the venting gas guiding elements 30 are rectangular-shaped bodies with one open side directed to the area 22 between the electrode terminals of the battery cells 14. Each of the venting gas guiding elements 30 includes a degassing opening 34 in a closed side of the venting gas guiding element 30 opposite to the open side. The degassing opening 34 of each venting gas guiding element 30 is fluidly coupled with the venting valves 18 of the battery cells 14 which are covered by the venting gas guiding elements 30.

In the embodiment of Fig. 1, the venting gas guiding elements 30 are arranged adjacent to and in (direct) contact with opposite sides of the CCU 12, e.g. two venting gas guiding elements 30 are in contact with one side (left side in Fig. 1) of the CCU 12 and two venting gas guiding elements 30 are in contact with the opposing side (right side in Fig. 1) of the CCU 12. The shape of the venting gas guiding elements 30 is (perfectly) fitted to the open space adjacent to the CCU 12 in order to provide a tight connection therebetween such that no hot gas leaks, i.e. the hot gas merely discharges through the predetermined degassing channel 32 provided by the venting gas guiding element 30, thereby providing a battery system 100 capable of improving the protection of the electronics, e.g. the CSC 26, from harm caused by hot gas.

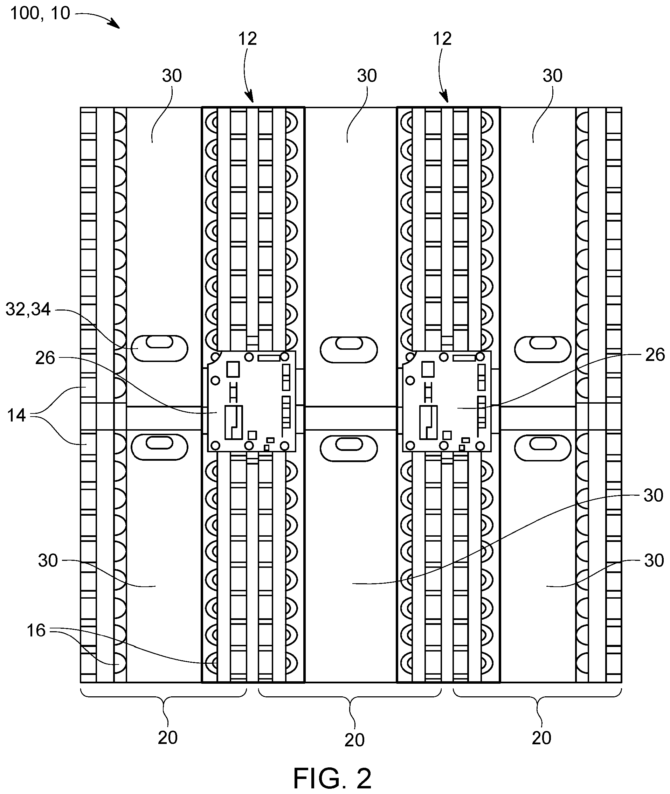

Fig. 2 illustrates a schematic top view of the battery system 100 of Fig. 1 according to another embodiment showing a top side of a battery pack 10 with two CCUs 12. As recurring features of the battery system 100 are depicted with the same reference numbers, a recurring description thereof is omitted. The following explanations are therefore limited to merely explain the differences between the battery systems 100 displayed in Figs. 1 and 2.

The battery pack 10 of the battery system 100 of Fig. 2 further includes another cell stack 20 and another CCU 12 which are each structural identical to the cell stacks 20 and the CCU 12 as described in view of Fig. 1. Furthermore, Fig. 2 depicts the venting gas guiding element 30 inserted into the lower part of the left cell stack 20.

The three cell stacks 20 extend adjacent to each other along the stacking direction. The CCUs 12 are also arranged adjacent to each other and to cover adjacent rows of the electrode terminals 16 of the battery cells 14 of adjacent cell stacks 20. In detail, the left CCU 12 covers the adjacent rows of the electrode terminals 16 of the battery cells 14 of the left and the middle cell stacks 20, while the right CCU 12 covers the adjacent rows of the electrode terminals 16 of the battery cells 14 of the middle and the right cell stacks 20. As already discussed in view of Fig. 1, each of the cell stacks 20 includes two venting gas guiding elements 30 spaced apart from each other along the stacking direction. Each venting gas guiding element 30 accommodates one degassing channel 32.

As it may be understood in view of Fig. 2, the degassing channels 32 of the cell stack 20 arranged in the middle of the three cell stacks 20 are formed within the open space between both CCUs 12 via the venting gas guiding elements 30. Furthermore, the embodiment of Fig. 2 exemplarily shows that the beneficial technical effects described herein with respect to the arrangement pattern of the battery pack 10, e.g. the battery cells 14 and CCUs 12, may also be applied to battery packs 10 including any number (n) of cell stacks 20 extending adjacent to each other along the stacking direction with a corresponding amount (n-1) of identical CCUs 12.

## Claims

1. A battery system (100), comprising:
a battery pack (10) comprising a plurality of battery cells (14) each having a pair of electrode terminals (16) and a venting valve (18) disposed between the electrode terminals (16), the battery cells (14) being arranged in at least two cell stacks (20) extending adjacent to each other along a stacking direction; wherein the electrode terminals (16) and the venting valves (18) of the battery cells (14) face a first side of the battery pack (10); and
a cell contacting unit, CCU, (12) disposed on the first side of the battery pack (10), the CCU (12) comprising a plurality of busbars electrically connecting the adjacent rows of electrode terminals (16) of battery cells (14) of two adjacent cell stacks (20), wherein the CCU (12) is configured to cover both adjacent rows of the electrode terminals (16) of the battery cells (14) of the adjacent cell stacks (20) and less than half of the area (22) between the electrode terminals (16) of each of the battery cells (14) of the adjacent cell stacks (20).

2. The battery system (100) according to claim 1, wherein the CCU (12) is configured to not extend into the area (22) between the electrode terminals (16) of each of the battery cells (14) of the adjacent cell stacks (20).

3. The battery system (100) according to any one of the preceding claims, wherein the CCU (12) further comprises measuring lines (24) for transmitting at least one physical property of the battery cells (14), and
wherein the measuring lines (24) are arranged between both adjacent rows of the electrode terminals (16) of the battery cells (14) of the adjacent cell stacks (20).

4. The battery system (100) according to claim 3, wherein the CCU (12) further comprises a cell supervision circuit, CSC, (26) for detecting the at least one physical property of the battery cells (14), and
wherein the CSC (26) is connected to the measuring lines (24) and arranged on a first side of the CCU (12) facing away from the battery cells (14).

5. The battery system (100) according to any one of the preceding claims, wherein the CCU (12) further comprises an electrically isolating carrier (28) configured to cover both adjacent rows of the electrode terminals (16) of the battery cells (14) of the adjacent cell stacks (20) and less than half of the area (22) between the electrode terminals (16) of each of the battery cells (14) of the adjacent cell stacks (20), and
wherein the busbars and/or the measuring lines (24) are fixed to the electrically isolating carrier (28).

6. The battery system (100) according to any one of the preceding claims, further comprising a venting gas guiding element (30) arranged above the venting valves (18) of the battery cells (14) of one of the cell stacks (20), wherein the venting gas guiding element (30) extends along the stacking direction for accommodating a degassing channel (32) of the cell stack (20).

7. The battery system (100) according to claim 6, wherein the venting gas guiding element (30) comprises a U-shaped cross section, and
wherein an open side of the venting gas guiding element (30) faces the venting valves (18) of the battery cells (14).

8. The battery system (100) according to claim 6 or 7, wherein the venting gas guiding element (30) comprises at least one degassing opening (34) in a closed side of the venting gas guiding element (30) opposite to the open side.

9. The battery system (100) according to any one of claims 6 to 8, wherein the venting gas guiding element (30) is arranged adjacent to and in contact with the CCU (12).

10. The battery system (100) according to claims 6 to 9, comprising a plurality of venting gas guiding elements (30) arranged adjacent to and in contact with one side of and/or with opposite sides of the CCU (12) along the stacking direction.

11. The battery system (100) according to any one of the preceding claims, further comprising an electronics cover configured to extend along the stacking direction and to cover the CCU and/or the CSC (26).

12. The battery system (100) according to claim 11, wherein the electronics cover comprises a U-shaped cross section, wherein an open side of the electronics cover faces the CCU and/or the CSC (26).

13. The battery system (100) according to any one of claims 6 to 12, wherein the venting gas guiding element (30) and/or the electronics cover consist of mica.

14. The battery system (100) according to any one of the preceding claims,
wherein
the battery cells (14) are arranged in at least three cell stacks (20) extending adjacent to each other along the stacking direction, and
wherein the battery system (100) comprises two adjacently disposed CCUs (12) so that the degassing channel (32) of the cell stack (20) arranged in the middle of the three cell stacks (20) is partially formed by the open space between both CCUs (12).

15. An electric vehicle comprising the battery system (100) according to any one of the preceding claims.

## Patentansprüche

1. Batteriesystem (100), umfassend:
einen Batteriepack (10), der eine Vielzahl von Batteriezellen (14) umfasst, die jeweils ein Paar Elektrodenanschlüsse (16) und ein zwischen den Elektrodenanschlüssen (16) angeordnetes Entlüftungsventil (18) aufweisen, wobei die Batteriezellen (14) in mindestens zwei Zellstapeln (20) angeordnet sind, die sich entlang einer Stapelrichtung benachbart zueinander verlaufen; wobei die Elektrodenanschlüsse (16) und die Entlüftungsventile (18) der Batteriezellen (14) einer ersten Seite des Batteriepacks (10) zugewandt sind; und
eine Zellkontaktierungseinheit, CCU, (12), die auf der ersten Seite des Batteriepacks (10) angeordnet ist, wobei die CCU (12) eine Vielzahl von Sammelschienen umfasst, die die benachbarten Reihen von Elektrodenanschlüssen (16) von Batteriezellen (14) von zwei benachbarten Zellstapeln (20) elektrisch verbinden, wobei die CCU (12) konfiguriert ist, um sowohl benachbarte Reihen der Elektrodenanschlüsse (16) der Batteriezellen (14) der benachbarten Zellstapel (20) als auch weniger als die Hälfte des Bereichs (22) zwischen den Elektrodenanschlüssen (16) jeder der Batteriezellen (14) der benachbarten Zellstapel (20) zu bedecken.

2. Batteriesystem (100) nach Anspruch 1, wobei die CCU (12) so konfiguriert ist, dass sie sich nicht in den Bereich (22) zwischen den Elektrodenanschlüssen (16) der einzelnen Batteriezellen (14) der benachbarten Zellstapel (20) erstreckt.

3. Batteriesystem (100) nach einem der vorhergehenden Ansprüche, wobei die CCU (12) ferner Messleitungen (24) zur Übertragung mindestens einer physikalischen Eigenschaft der Batteriezellen (14) umfasst, und
wobei die Messleitungen (24) zwischen beiden benachbarten Reihen der Elektrodenanschlüsse (16) der Batteriezellen (14) der benachbarten Zellstapel (20) angeordnet sind.

4. Batteriesystem (100) nach Anspruch 3, wobei die CCU (12) ferner eine Zellüberwachungsschaltung, CSC, (26) zum Erfassen der mindestens einen physikalischen Eigenschaft der Batteriezellen (14) umfasst, und
wobei die CSC (26) mit den Messleitungen (24) verbunden und auf einer ersten Seite der CCU (12) angeordnet ist, die von den Batteriezellen (14) abgewandt ist.

5. Batteriesystem (100) nach einem der vorhergehenden Ansprüche, wobei die CCU (12) ferner einen elektrisch isolierenden Träger (28) umfasst, der konfiguriert ist, um sowohl die benachbarten Reihen der Elektrodenanschlüsse (16) der Batteriezellen (14) der benachbarten Zellstapel (20) als auch weniger als die Hälfte des Bereichs (22) zwischen den Elektrodenanschlüssen (16) jeder der Batteriezellen (14) der benachbarten Zellstapel (20) zu bedecken, und
wobei die Sammelschienen und/oder die Messleitungen (24) an dem elektrisch isolierenden Träger (28) befestigt sind.

6. Batteriesystem (100) nach einem der vorhergehenden Ansprüche, ferner umfassend ein Entlüftungsgas-Führungselement (30), das über den Entlüftungsventilen (18) der Batteriezellen (14) eines der Zellstapel (20) angeordnet ist, wobei das Entlüftungsgas-Führungselement (30) entlang der Stapelrichtung verläuft, um einen Entgasungskanal (32) des Zellstapels (20) aufzunehmen.

7. Batteriesystem (100) nach Anspruch 6, wobei das Entlüftungsgas-Führungselement (30) einen U-förmigen Querschnitt umfasst, und
wobei eine offene Seite des Entlüftungsgas-Führungselements (30) den Entlüftungsventilen (18) der Batteriezellen (14) zugewandt ist.

8. Batteriesystem (100) nach Anspruch 6 oder 7, wobei das Entlüftungsgas-Führungselement (30) mindestens eine Entlüftungsöffnung (34) in einer geschlossenen Seite des Entlüftungsgas-Führungselements (30) gegenüber der offenen Seite aufweist.

9. Batteriesystem (100) nach einem der Ansprüche 6 bis 8, wobei das Entlüftungsgas-Führungselement (30) benachbart zu und in Kontakt mit der CCU (12) angeordnet ist.

10. Batteriesystem (100) nach den Ansprüchen 6 bis 9, umfassend eine Vielzahl von Entlüftungsgas-Führungselementen (30), die benachbart zu und in Kontakt mit einer Seite und/oder mit gegenüberliegenden Seiten der CCU (12) entlang der Stapelrichtung angeordnet sind.

11. Batteriesystem (100) nach einem der vorhergehenden Ansprüche, ferner umfassend eine Elektronikabdeckung, die konfiguriert ist, sich entlang der Stapelrichtung zu verlaufen und die CCU und/oder die CSC (26) zu bedecken.

12. Batteriesystem (100) nach Anspruch 11, wobei die Elektronikabdeckung einen U-förmigen Querschnitt umfasst, wobei eine offene Seite der Elektronikabdeckung der CCU und/oder der CSC (26) zugewandt ist.

13. Batteriesystem (100) nach einem der Ansprüche 6 bis 12, wobei das Entlüftungsgas-Führungselement (30) und/oder die Elektronikabdeckung aus Glimmer bestehen.

14. Batteriesystem (100) nach einem der vorhergehenden Ansprüche, wobei
die Batteriezellen (14) in mindestens drei Zellstapeln (20) angeordnet sind, die sich entlang der Stapelrichtung benachbart zueinander verlaufen, und
wobei das Batteriesystem (100) zwei benachbart angeordnete CCUs (12) umfasst, so dass der Entgasungskanal (32) des in der Mitte der drei Zellstapel (20) angeordneten Zellstapels (20) teilweise durch den freien Raum zwischen beiden CCUs (12) gebildet wird.

15. Elektrofahrzeug, umfassend das Batteriesystem (100) nach einem der vorhergehenden Ansprüche.

## Revendications

1. Système de batterie (100), comportant :
un bloc-batterie (10) comportant une pluralité d'éléments de batterie (14) ayant chacun une paire de bornes d'électrode (16) et une vanne d'évacuation (18) disposée entre les bornes d'électrode (16), les éléments de batterie (14) étant agencés dans au moins deux empilements d'éléments (20) s'étendant de manière adjacente les uns aux autres le long d'une direction d'empilement ; dans lequel les bornes d'électrode (16) et les vannes d'évacuation (18) des éléments de batterie (14) font face à un premier côté du bloc-batterie (10) ; et
une unité de mise en contact d'éléments, CCU, (12) disposée sur le premier côté du bloc-batterie (10), la CCU (12) comportant une pluralité de barres omnibus connectant électriquement les rangées adjacentes de bornes d'électrode (16) d'éléments de batterie (14) de deux empilements d'éléments (20) adjacents, dans lequel la CCU (12) est configurée pour recouvrir les deux rangées adjacentes de bornes d'électrode (16) d'éléments de batterie (14) des empilements d'éléments (20) adjacents et moins de la moitié de la surface (22) entre les bornes d'électrode (16) de chacun des éléments de batterie (14) des empilements d'éléments (20) adjacents.

2. Système de batterie (100) selon la revendication 1, dans lequel la CCU (12) est configurée pour ne pas s'étendre dans la surface (22) entre les bornes d'électrode (16) de chacun des éléments de batterie (14) des empilements d'éléments (20) adjacents.

3. Système de batterie (100) selon l'une quelconque des revendications précédentes, dans lequel la CCU (12) comporte en outre des lignes de mesure (24) pour transmettre au moins une propriété physique des éléments de batterie (14), et
dans lequel les lignes de mesure (24) sont agencées entre les deux rangées adjacentes des bornes d'électrode (16) des éléments de batterie (14) des empilements d'éléments (20) adjacents.

4. Système de batterie (100) selon la revendication 3, dans lequel la CCU (12) comporte en outre un circuit de supervision d'éléments, CSC, (26) pour détecter l'au moins une propriété physique des éléments de batterie (14), et
dans lequel le CSC (26) est connecté aux lignes de mesure (24) et agencé sur un premier côté de la CCU (12) orienté à l'opposé des éléments de batterie (14).

5. Système de batterie (100) selon l'une quelconque des revendications précédentes, dans lequel la CCU (12) comporte en outre un support d'isolation électrique (28) configuré pour recouvrir les deux rangées adjacentes des bornes d'électrode (16) des éléments de batterie (14) des empilements d'éléments (20) adjacents et moins de la moitié de la surface (22) entre les bornes d'électrode (16) de chacun des éléments de batterie (14) des empilements d'éléments (20) adjacents, et
dans lequel les barres omnibus et/ou les lignes de mesure (24) sont fixées au support d'isolation électrique (28).

6. Système de batterie (100) selon l'une quelconque des revendications précédentes, comportant en outre un élément de guidage de gaz d'évacuation (30) agencé au-dessus des vannes d'évacuation (18) des éléments de batterie (14) de l'un des empilements d'éléments (20), dans lequel l'élément de guidage de gaz d'évacuation (30) s'étend le long de la direction d'empilement pour accueillir un canal de dégazage (32) de l'empilement d'éléments (20).

7. Système de batterie (100) selon la revendication 6, dans lequel l'élément de guidage de gaz d'évacuation (30) comporte une section transversale en U, et
dans lequel un côté ouvert de l'élément de guidage de gaz d'évacuation (30) fait face aux vannes d'évacuation (18) des éléments de batterie (14).

8. Système de batterie (100) selon la revendication 6 ou 7, dans lequel l'élément de guidage de gaz d'évacuation (30) comporte au moins une ouverture de dégazage (34) dans un côté fermé de l'élément de guidage de gaz d'évacuation (30) opposé au côté ouvert.

9. Système de batterie (100) selon l'une quelconque des revendications 6 à 8, dans lequel l'élément de guidage de gaz d'évacuation (30) est agencé de manière adjacente à la CCU (12) et en contact avec celle-ci.

10. Système de batterie (100) selon les revendications 6 à 9, comportant une pluralité d'éléments de guidage de gaz d'évacuation (30) agencés de manière adjacente à et en contact avec un côté et/ou des côtés opposés de la CCU (12) le long de la direction d'empilement.

11. Système de batterie (100) selon l'une quelconque des revendications précédentes, comportant en outre un couvercle d'électronique configuré pour s'étendre le long de la direction d'empilement et pour recouvrir la CCU et/ou le CSC (26).

12. Système de batterie (100) selon la revendication 11, dans lequel le couvercle d'électronique comporte une section transversale en U, dans lequel un côté ouvert du couvercle d'électronique fait face à la CCU et/ou au CSC (26).

13. Système de batterie (100) selon l'une quelconque des revendications 6 à 12, dans lequel l'élément de guidage de gaz d'évacuation (30) et/ou le couvercle d'électronique sont constitués de mica.

14. Système de batterie (100) selon l'une quelconque des revendications précédentes, dans lequel
les éléments de batterie (14) sont agencés dans au moins trois empilements d'éléments (20) s'étendant de manière adjacente les uns aux autres le long de la direction d'empilement, et
dans lequel le système de batterie (100) comporte deux CCU (12) disposées de manière adjacente de sorte que le canal de dégazage (32) de l'empilement d'éléments (20) agencé au milieu des trois empilements d'éléments (20) soit partiellement formé par l'espace ouvert entre les deux CCU (12).

15. Véhicule électrique comportant le système de batterie (100) selon l'une quelconque des revendications précédentes.
